(19) **Europäisches Patentamt**
**European Patent Office**
**Office européen des brevets**

(11) **EP 2 976 264 B1**

(12) **FASCICULE DE BREVET EUROPEEN**

(45) Date de publication et mention
de la délivrance du brevet:
**03.01.2018 Bulletin 2018/01**

(51) Int Cl.:
*A01N 1/02* (2006.01)        *A61J 1/10* (2006.01)
*B65B 31/00* (2006.01)        *B65B 57/10* (2006.01)
*B65B 63/08* (2006.01)        *B65B 31/04* (2006.01)
*B65B 3/00* (2006.01)        *A61J 1/14* (2006.01)
*A61J 1/16* (2006.01)        *F25D 3/10* (2006.01)
*B65D 81/20* (2006.01)

(21) Numéro de dépôt: **14711255.1**

(22) Date de dépôt: **20.03.2014**

(86) Numéro de dépôt international:
**PCT/EP2014/055564**

(87) Numéro de publication internationale:
**WO 2014/147159 (25.09.2014 Gazette 2014/39)**

(54) **INSTALLATION ET PROCEDE POUR LA PREPARATION D'UN CONTENEUR CHARGE AVEC UN FLUIDE BIOPHARMACEUTIQUE**

VORRICHTUNG UND VERFAHREN ZUR HERSTELLUNG EINER CONTAINER GELADEN MIT EINEN BIOPHARMAZEUTISCHEN FLUID.

DEVICE AND METHOD FOR THE PREPARATION OF A CONTAINER LOADED WITH BIOPHARMACEUTICAL FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2013 FR 1352607**

(43) Date de publication de la demande:
**27.01.2016 Bulletin 2016/04**

(73) Titulaire: **Sartorius Stedim North America Inc.**
**Bohemia, NY 11716 (US)**

(72) Inventeur: **CUTTING, Jonathan**
**East Setauket, NY 11733 (US)**

(74) Mandataire: **Derambure Conseil**
**66, rue de la Chaussée d'Antin**
**75009 Paris (FR)**

(56) Documents cités:
**EP-A1- 1 593 601        EP-A2- 2 101 129**
**WO-A1-2011/001178        GB-A- 780 029**

**Description**

L'invention concerne le domaine du conditionnement de l'intérieur d'un conteneur étanche chargé avec un fluide biopharmaceutique (remplissage partiel) et un gaz, typiquement de l'air ou de l'azote ($N_2$), le conteneur étant spécialement équipé en vue de contrôler le remplissage de ce gaz. L'invention a pour objet en particulier une installation et un procédé pour la préparation d'un tel type de conteneur chargé partiellement avec un fluide biopharmaceutique, en particulier à l'état congelé.

Dans le contexte de l'invention, on entend par « fluide biopharmaceutique », un fluide issu de la biotechnologie - milieux de cultures, cultures cellulaires, solutions tampon, liquides de nutrition artificielle, fractions sanguines et dérivés de produits sanguins- ou un fluide pharmaceutique ou plus généralement un fluide destiné à être utilisé dans le domaine médical.

On connaît déjà un conteneur présentant une paroi périphérique souple, spécialement adapté pour recevoir un tel fluide biopharmaceutique, et ce de manière tout à fait satisfaisante. Généralement, un tel conteneur peut être associé à une structure rigide de support pour former un récipient de fluide biopharmaceutique. Un tel récipient est par exemple décrit dans EP 1 441 585. D'autres exemples de tels récipients peuvent être trouvés dans WO 2007/103917.

Pour favoriser la conservation du fluide biopharmaceutique avant une étape de procédé ou une utilisation ultérieure, il a de plus été proposé de le maintenir sous forme gelée. Pour cela, des systèmes de traitement thermique ont été prévus, notamment pour congeler le fluide biopharmaceutique contenu dans les conteneurs. Les spécificités des fluides biopharmaceutiques ont conduit au développement de conteneurs spécialement adaptés à la congélation, par exemple présentant une forme légèrement évasée tel que décrit dans EP 1 441 586. De façon connue en soi, le fluide biopharmaceutique à l'état liquide ne remplit que partiellement le conteneur, et celui-ci est pressurisé. Par ailleurs, l'expansion du volume de ce fluide biopharmaceutique durant la congélation est susceptible de générer un niveau de surpression. Avant la congélation, le gaz est injecté dans le conteneur de façon à suffisamment remplir le volume complémentaire. Ce volume rempli par le gaz correspond généralement à un espace de tête lorsque le conteneur se présente sous la forme d'une poche définissant une seule chambre commune de remplissage pour le fluide biopharmaceutique et pour le gaz. Le fait que la pression soit maintenue au-dessus d'un certain seuil permet alors de garantir un contact physique entre la partie supérieure du conteneur et la paroi interne du système de traitement thermique qui est utilisé pour obtenir une congélation sensiblement homogène du produit biopharmaceutique (voir un exemple de tel système de traitement thermique dans WO 2011/063381). La congélation peut cependant être considérée comme optionnelle, certains fluides biopharmaceutiques pouvant être conservés de manière satisfaisante pendant une durée raisonnable sans ce type de traitement thermique. On peut noter que même sans les effets d'expansion/contraction liée à la congélation/décongélation, des variations de pression du milieu ambiant peuvent également créer un niveau de surpression dans le conteneur.

On comprend que, pour une application de stockage de fluide biopharmaceutique, il est préférable que le conteneur puisse être jeté après utilisation (conteneur à usage unique). De ce fait, les parois du conteneur, à base d'une matière plastique flexible et imperméable aux gaz, sont aussi minces qu'un film afin de réduire la quantité de plastique.

Afin de conserver un format relativement stable du conteneur, on peut s'assurer que le volume interne de remplissage de gaz (complémentaire du volume occupé par le fluide biopharmaceutique) soit pressurisé de façon contrôlée, le niveau de surpression restant par exemple inférieur à un seuil de l'ordre de 100 mbar (1,45 psi), de préférence en ne dépassant pas 50 mbar (0,73 psi).

Durant le transport, le gaz occupe un volume interne de remplissage à l'intérieur du conteneur qui peut changer en fonction des modifications de la pression ambiante. Si le volume interne pouvant recevoir le gaz est trop rempli avant la congélation ou avant une baisse de pression du milieu ambiant, alors le conteneur peut gonfler jusqu'à un maximum d'expansion. Une fois le maximum d'expansion atteint, la pression du gaz à l'intérieur du conteneur augmente en réaction à une diminution de la pression ambiante. Lors de ce phénomène de gonflement (et idem en cas de rétractation), les fines parois doivent bouger et se plier. De telles sollicitations sont susceptibles d'altérer l'étanchéité du conteneur, avec un risque de craquelures dans la matière plastique dans des conditions extrêmes (matière qui reste fragile). C'est pourquoi, le mouvement des parois du conteneur est indésirable et devrait être évité.

Dans le document EP2101129 A2 sont divulgués une installation et un procédé permettant d'atteindre un niveau de pression souhaité dans un conteneur pour fluides bio-pharmaceutiques. Cependant, cette installation et ce procédé diffèrent de l'invention en ce que le conteneur n'est pas apte à être mis en surpression et en ce qu'un vide poussé est obtenu dans le conteneur afin de déterminer un paramètre de contrôle de remplissage de gaz. Le niveau de pression souhaité n'est atteint qu'ensuite par l'ajout d'un volume calculé de gaz dans le conteneur. Ci-après, un exposé de l'invention telle que caractérisée dans les revendications.

Selon un premier aspect, l'invention a pour objet une installation pour la préparation d'un conteneur chargé avec un fluide biopharmaceutique, l'installation comprenant :

- un conteneur étanche dans lequel est placé un fluide biopharmaceutique et un gaz qui occupe un volume interne de remplissage, le conteneur comprenant un orifice de passage de gaz et étant adapté pour être rempli en gaz avec un niveau initial de surpression dans le volume interne de remplissage ;

- un module de commande pour contrôler un remplissage en gaz dans le conteneur ;
- un module d'analyse pour estimer un paramètre de contrôle de remplissage de gaz qui est représentatif dudit volume interne de remplissage (Vg). L'installation comporte un dispositif de pompage pour générer une dépression dans le volume interne de remplissage par circulation forcée du gaz hors du conteneur via l'orifice de passage de gaz, le module de commande et le dispositif de pompage étant coordonnés pour ajuster la durée de la circulation forcée en fonction du paramètre de contrôle déterminé par le module d'analyse.

Ainsi, l'installation ci-dessus peut permettre, d'une part de connaître la quantité de gaz qu'il est souhaitable d'évacuer en vue d'anticiper les conditions variables de transport, et d'autre part de retirer sélectivement une quantité de gaz. Pour anticiper par exemple des conditions de transport extrêmes, environ 40% du gaz présent dans le volume estimé peut être retiré de façon à générer une dépression (dans le cas avec congélation, ce retrait est évidemment effectué après la congélation du fluide pharmaceutique). Ce seuil d'environ 40% permet de prendre en compte la variation maximale d'altitude par transport terrestre. En effet celle-ci ne peut pas excéder environ 3000 mètres (compte tenu des routes actuellement existantes), ce qui représente une variation de pression extérieure de l'ordre de 32%. Il faut également noter que dans le cas d'un transport aérien, l'altitude maximale est typiquement comprise entre 2000 et 4000 mètres. A titre d'exemple, les principales sociétés de transport spécifient des altitudes inférieures à 3000 mètres pour un avion cargo : 2438m (8000 ft). La génération d'une dépression avec ce seuil d'environ 40% est bien adaptée au cas du transport aérien car la quantité de gaz dans le conteneur est insuffisante dans ce cas pour créer une surpression significative dans les conditions d'altitude habituelles.

Selon une particularité, le module de commande est adapté pour commander sélectivement un flux d'échappement du gaz via l'orifice de passage de gaz du conteneur, de façon à réduire le niveau de surpression dans le volume interne de remplissage.

Le paramètre de contrôle de remplissage de gaz étant représentatif du volume interne de remplissage, le module d'analyse est configuré pour estimer ce paramètre de contrôle par exemple en surveillant le flux d'échappement du gaz, entre un premier niveau de surpression et un deuxième niveau de surpression dans le volume interne de remplissage.

Par l'expression 'représentatif du volume interne de remplissage', on entend un paramètre égal au volume occupé par le gaz ou directement corrélé à ce volume (par exemple il peut s'agit d'une hauteur mesurée verticalement entre l'extrémité supérieure du conteneur et le niveau supérieur du fluide biopharmaceutique lorsque le volume de remplissage est un espace de tête à l'intérieur d'un conteneur de section sensiblement constante le long d'un axe longitudinal vertical).

L'installation permet de réduire le niveau de surpression. On comprend que ce type d'installation est aussi bien adapté à des conteneurs de petite dimension (quelques centilitres ou moins) qu'à des conteneurs de grande dimension (au moins une ou plusieurs centaines de litres).

Selon d'autres particularités, le module de commande est adapté pour commander sélectivement un flux d'échappement du gaz via l'orifice de passage de gaz du conteneur, de façon à réduire le niveau de surpression dans le volume interne de remplissage, **et en ce que** le paramètre de contrôle de remplissage de gaz est représentatif dudit volume interne de remplissage, le module d'analyse étant configuré pour estimer ledit paramètre de contrôle en surveillant le flux d'échappement du gaz, entre un premier niveau de surpression OP1 et un deuxième niveau de surpression OP2 dans le volume interne de remplissage.

Selon d'autres particularités, le module d'analyse comprend ou est relié à un compteur de temps adapté pour déterminer la durée d'échappement du gaz $\Delta t$ nécessaire pour descendre du premier niveau de surpression OP1 au deuxième niveau de surpression OP2.

Selon d'autres particularités, le module d'analyse détermine, en tant que paramètre de contrôle, le volume interne de remplissage (Vg) selon la corrélation suivante :

$$Vg = Q / k + Vc$$

où :

- Vg est le volume interne de remplissage occupé par le gaz ;
- Q est une constante de débit volumique ;
- Vc est une constante de volume ;
- k est un constante de décroissance ;

- sachant que la constante de décroissance est calculé selon l'équation :

$$k = - \ln (OP2/OP1) / \Delta t$$

avec
- OP1 le premier niveau de surpression à l'intérieur du conteneur ;
- OP2 le deuxième niveau de surpression à l'intérieur du conteneur ;
- $\Delta t$ la durée d'échappement du gaz pour descendre du premier niveau de surpression OP1 au deuxième niveau de surpression OP2 ;
- ln représentant la fonction logarithme népérien.

Selon d'autres particularités, l'installation comprend en outre une pluralité de valves comprenant des valves commandées sélectivement par le module de commande et présentant :

- une première configuration permettant une circulation du gaz dans un sens entrant dans le conteneur; et
- une deuxième configuration permettant une circulation du gaz dans un sens sortant du conteneur;

le module de commande étant adapté pour paramétrer successivement la première configuration afin de permettre au conteneur d'être rempli en gaz jusqu'à un état de surpression dans ledit volume interne de remplissage et la deuxième configuration afin de permettre un échappement du gaz hors du conteneur via son orifice de passage de gaz au plus jusqu'à un état sans surpression dans ledit volume interne de remplissage.

Selon d'autres particularités, ladite pluralité de valves comprend une première valve d'entrée de gaz sélectivement ouverte par le module de commande dans la première configuration et une deuxième valve d'échappement de gaz sélectivement ouverte par le module de commande dans la deuxième configuration, la valve d'entrée de gaz et la valve d'échappement de gaz étant en communication fluidique avec ledit orifice de passage de gaz.

Selon d'autres particularités, le dispositif de pompage comporte une pompe à vide et une troisième valve de prélèvement de gaz faisant partie de ladite pluralité de valves, le module de commande étant configuré pour ouvrir sélectivement la valve de prélèvement de gaz et fermer la valve d'entrée de gaz et la valve d'échappement de gaz lorsque la pompe à vide est actionnée.

Selon d'autres particularités, le module d'analyse comporte ou est relié à un capteur de pression en communication fluidique avec l'orifice de passage de gaz et adapté pour mesurer un niveau de surpression à l'intérieur du conteneur.

Selon d'autres particularités, l'installation selon l'une quelconque des revendications précédentes, comporte un dispositif d'injection de gaz adapté pour injecter du gaz, de préférence sous pression, dans le conteneur par ledit orifice de passage de gaz avant la détermination du paramètre de contrôle.

Selon d'autres particularités, le dispositif d'injection de gaz, le dispositif de pompage et une unité de contrôle comprenant le module de commande et le module d'analyse sont incorporés dans un appareil de conditionnement de l'intérieur du conteneur.

Selon d'autres particularités, le conteneur est flexible et fermé de manière étanche, le conteneur comprenant des parois en matière plastique imperméable aux gaz.

Selon un autre aspect, l'invention se rapporte à un procédé de préparation d'un conteneur étanche chargé avec un fluide biopharmaceutique, un gaz occupant un volume interne de remplissage à l'intérieur du conteneur avec un niveau initial de surpression, dans lequel on contrôle un niveau de remplissage en gaz dans le conteneur, le procédé comprenant les étapes consistant essentiellement à :

b) estimer un paramètre de contrôle de remplissage de gaz qui est représentatif dudit volume interne de remplissage,
c) générer une dépression dans le volume interne de remplissage par circulation forcée du gaz hors du conteneur, la durée de la circulation forcée étant ajustée en fonction dudit paramètre de contrôle.

Selon d'autres particularités, la circulation forcée est réalisée par pompage avec un débit constant, la circulation forcée étant stoppée après une première durée seuil correspondant au temps nécessaire à évacuer une quantité de gaz égale à 30% de la quantité initiale de gaz contenue dans le volume interne de remplissage déterminé à l'étape b) et avant une deuxième durée seuil correspondant au temps nécessaire à évacuer une quantité de gaz égale à 50% de la quantité initiale de gaz contenue dans le volume interne de remplissage déterminé à l'étape b).

Selon d'autres particularités, le procédé comprend en outre l'étape suivante avant l'étape b) :

a) commander sélectivement un flux d'échappement du gaz via un orifice de passage de gaz du conteneur, de façon à abaisser le niveau de surpression à l'intérieur du conteneur; et dans lequel b) estimer comprend surveiller le flux d'échappement du gaz entre un premier niveau de surpression OP1 et un deuxième niveau de surpression OP2 dans le volume interne de remplissage.

Selon d'autres particularités, ledit paramètre de contrôle est estimé en déterminant la durée d'échappement du gaz Δt nécessaire pour descendre du premier niveau de surpression OP1 au deuxième niveau de surpression OP2.

Selon d'autres particularités, le procédé comprend avant l'étape a) les étapes consistant essentiellement à :

- injecter un gaz, de préférence de l'air ou de l'azote, dans le conteneur jusqu'à atteindre dans le volume interne de remplissage une surpression comprise entre 10 et 50 mbar ; et
- congeler le fluide biopharmaceutique.

Selon d'autres particularités, l'étape b) est réalisée lorsqu'une valve d'échappement de gaz en communication fluidique avec l'orifice de passage de gaz est sélectivement ouverte, ladite valve d'échappement de gaz étant ouverte jusqu'à égaliser la pression entre le volume interne de remplissage et le milieu ambiant, plusieurs mesures d'un paramètre du gaz représentatif d'un niveau de surpression dans le volume interne de remplissage étant réalisées pendant l'étape b).

On décrit maintenant brièvement les figures des dessins.

La figure 1 est une vue schématique en perspective d'une partie d'une installation pour la préparation d'un conteneur selon un premier mode de réalisation.

La figure 2 est une vue en perspective illustrant schématiquement une partie d'une installation pour la préparation d'un conteneur selon un deuxième mode de réalisation.

La figure 3 est une vue schématique partielle en perspective d'une partie d'un système de traitement thermique.

La figure 4 est une vue perspective en éclaté d'une variante de réalisation de conteneur de fluide biopharmaceutique.

La figure 5 est une vue schématique de côté d'une partie d'une unité de stockage selon une autre variante de réalisation utilisable dans l'installation.

La figure 6 est une vue de face de la figure 5.

Ci-après un exposé détaillé de plusieurs modes de réalisation de l'invention assorti d'exemples et de référence aux dessins.

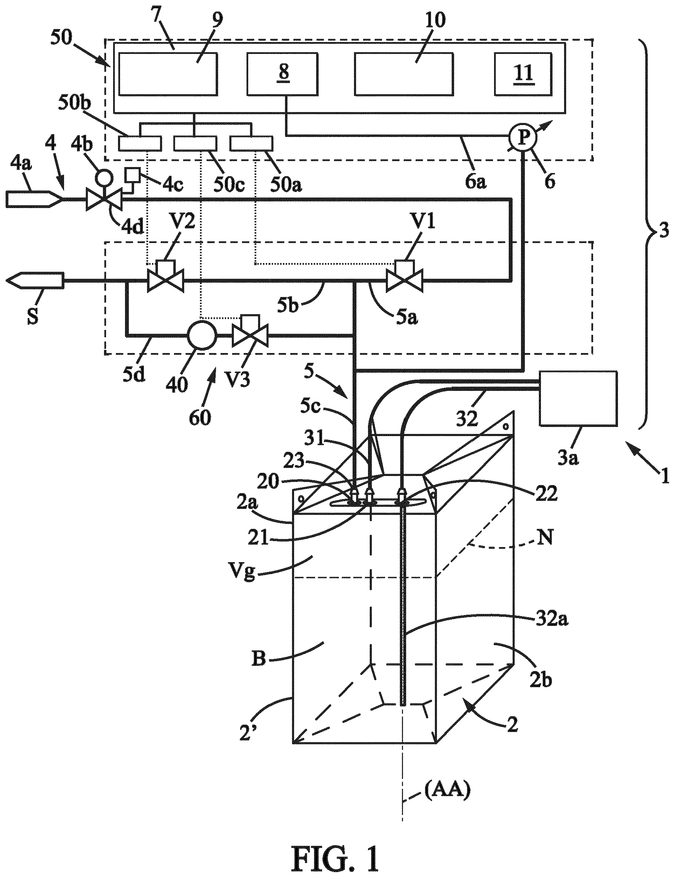

Comme cela est visible sur la figure 1, l'installation 1 comporte un conteneur 2 chargé avec un fluide biopharmaceutique B, ici à l'état congelé, et un appareil 3 de conditionnement de l'intérieur du conteneur 2.

Le conteneur 2 flexible comporte une enveloppe 2' souple qui limite un espace intérieur, apte à recevoir le contenu et ici le recevant effectivement.

Un tel conteneur 2 est typiquement une poche 3D qui comporte deux grandes parois reliées par et soudées à deux goussets latéraux, pouvant être pliée à plat (notamment pour le stockage et le transport) ou dépliée déployée (pour être emplie d'un contenu), le volume de l'espace intérieur pouvant être de 1 litre au moins, jusqu'à 3.000 litres, voire plus. Il est entendu que cette réalisation de poche est donnée à titre purement exemplatif, le conteneur flexible pouvant être réalisé différemment. Dans leurs principes, l'agencement et la réalisation d'un tel conteneur 2 flexible font partie des connaissances générales de l'homme du métier ou sont à sa portée. Dans tous les cas, le conteneur 2 présente une certaine flexibilité, étant réalisé en un film en matière plastique ayant une certaine souplesse, monocouche ou le plus souvent multicouche. Le film est toutefois sensiblement inextensible dans les conditions normales d'utilisation, de sorte que le volume de l'espace intérieur peut être considéré comme constant. C'est notamment pour assurer le maintien extérieur d'un tel conteneur 2 de grand volume, flexible, une fois empli de contenu, qu'il est prévu de le placer et le maintenir extérieurement dans une structure rigide de réception et de maintien.

Le conteneur flexible 2, empli et en situation, présente une partie inférieure 2b, disposée horizontalement, et une partie supérieure 2a, également disposée horizontalement. Il présente également un axe principal AA sensiblement vertical, par rapport auquel se comprennent les qualificatifs « inférieur », «supérieur », « latéral », « horizontal » et « vertical » appliqués au conteneur flexible dans son ensemble. Sous l'effet de la gravité, lors du traitement thermique, le contenu fluide, liquide, pâteux ou partiellement solide va se trouver principalement dans la partie inférieure 2b du conteneur flexible 2, alors que la partie supérieure 2a va principalement contenir un gaz à une pression P.

Le conteneur 2 flexible est le plus souvent pourvu de ports, tels que, par exemple, un port 21 d'entrée ou d'introduction d'un produit à mélanger au contenu du conteneur 2, situé dans la partie supérieure 2a du conteneur flexible 2, un port 22 de sortie de produit mélangé depuis le conteneur 2, et un port 20 d'amenée de gaz.

L'appareil 3 de conditionnement de l'intérieur du conteneur peut comporter un dispositif d'alimentation 3a de type conventionnel pour injecter le fluide biopharmaceutique B à l'intérieur du conteneur 2. Le dispositif d'alimentation 3a est raccordé au conteneur 2 par une ligne 31 de remplissage en communication fluide étanche avec le port d'entrée 21 du conteneur 2, pour délivrer du fluide biopharmaceutique à l'intérieur du conteneur 2. Le dispositif d'alimentation 3a peut aussi présenter une ligne 32 de vidange en communication fluide étanche avec le port de sortie 22 du conteneur 2, pour délivrer du fluide biopharmaceutique hors du conteneur 2. Sur cette figure 1, on a représenté la tubulure 32a interne au conteneur 2 et reliant le port de sortie 22 au fond du conteneur 2.

Le conteneur 2 est de type flexible, le plus souvent les ports 21, 22 de ce conteneur 2 forment chacun un connecteur. En sus de l'orifice de passage de gaz 20, au moins un port supplémentaire (non montré sur la figure 1) peut être prévu pour le montage d'un organe fonctionnel ou de moyens de mesure, par exemple d'un paramètre reflétant ou en relation avec l'homogénéité, l'hétérogénéité ou le mélange du contenu de l'espace intérieur.

L'appareil 3 de conditionnement de l'intérieur du conteneur peut optionnellement comporter une unité de traitement thermique (non montrée sur la figure 1) comme décrit dans WO 2011/063381, afin de permettre une congélation du fluide biopharmaceutique B contenu dans le conteneur 2. Une cavité de l'unité de traitement thermique présente une forme adaptée pour recevoir le conteneur 2.

Le produit biopharmaceutique B est liquide ou pâteux dans son ensemble du moins lorsqu'il doit être mélangé, de sorte, précisément à pouvoir être mélangé. Il peut ne présenter qu'une seule phase fluide ou plusieurs, y compris des produits originellement solides ou ayant une certaine tenue, à mélanger dans un support fluide. Un tel conteneur 2 est destiné typiquement à des fins de préparation d'un produit biopharmaceutique, de stockage, de transport, ou de réalisation d'un certain processus de nature physique, chimique ou biologique tel que mélange, ou bioréacteur ou système de congélation, décongélation.

Soit le contenu est liquide ou pâteux en permanence, soit il ne l'est qu'à un moment ou une période particulière. Par exemple, le contenu peut se trouver dans un état solide, par suite d'une opération de congélation ou dans un état fluide, notamment après sa décongélation. Dans un exemple de réalisation, l'installation 1 dispose de moyens de surveillance de l'état du fluide biopharmaceutique B, de façon à pouvoir détecter l'état de congélation et typiquement un état de complète congélation.

Lorsqu'une congélation est requise, l'appareil 3 de conditionnement de l'intérieur du conteneur peut optionnellement comporter un dispositif de contrôle (non montré) de l'état de congélation du fluide biopharmaceutique B contenu dans le conteneur 2, par exemple avec des capteurs de température et/ou avec une unité de surveillance de l'évolution du front de congélation par imagerie ultrasonore (comme décrit dans WO 2012/044403). Un tel dispositif de contrôle peut comporter plusieurs appareils réunis en une même station, ou distribués et comporter aussi une interface utilisateur permettant par exemple d'afficher des résultats de mesure de paramètres physiques à l'intérieur du conteneur 2.

Dans ce premier exemple de conditionnement, le conteneur 2 n'est rempli que partiellement de fluide biopharmaceutique B, et le niveau de fluide dans le conteneur 2 est représenté schématiquement par une ligne pointillée horizontale N sur la figure 1. Ainsi, la partie supérieure de tête du conteneur 2 (au-dessus du pointillé) est remplie de gaz à l'aide d'un dispositif 4 d'injection de gaz. Le conteneur 2 présente au moins un port ou orifice de passage de gaz 20 en communication fluidique étanche avec un connecteur 23 auquel est raccordé le dispositif 4 d'injection de gaz. Le connecteur 23 est ici raccordé à une ligne d'entrée/sortie de gaz 5 du dispositif 4 d'injection de gaz. Cette ligne d'entrée/sortie de gaz 5 comprend un tronçon d'amenée de gaz 5a, un tronçon de sortie de gaz 5b, parallèle au tronçon d'amenée de gaz 5a, et un tronçon commun 5c qui, à une extrémité, est relié aux tronçons d'amenée de gaz 5a et de sortie de gaz 5b, et à l'autre extrémité est relié à l'orifice de passage de gaz 20 via le connecteur 23. Le dispositif 4 d'injection de gaz comprend de façon connue en soi une source de gaz 4a, par exemple de l'air ou de l'azote ($N_2$), à laquelle est raccordé de manière fluide et étanche le tronçon d'amenée de gaz 5a.

La pression P du gaz contenu dans le conteneur 23 peut optionnellement être régulée par un système de régulation de pression. On peut par exemple utiliser un système tel que ceux utilisés pour vérifier la qualité de filtres. La régulation de la pression interne au conteneur 2 permet d'éviter que la pression de gaz dépasse un seuil prédéterminé (par exemple 100 mbar) qui pourrait atteindre à l'intégrité physique du conteneur 2. Par ailleurs, le fait que la pression soit maintenue au-dessus d'un certain seuil permet de garantir un contact physique entre la partie supérieure du conteneur 2 et la paroi interne de l'unité de traitement thermique. Le système de régulation de pression comprend par exemple un capteur de pression 6, ici situé dans un emplacement en communication fluide avec l'intérieur du conteneur 2.

L'appareil 3 de conditionnement de l'intérieur du conteneur comporte une unité de contrôle 7 adaptée pour ajuster la quantité de gaz après l'injection qui a été préalablement réalisée avec un niveau de surpression par le dispositif 4 d'injection de gaz. Cette unité de contrôle 7 peut faire partie d'un équipement 50 de contrôle de la circulation de gaz. Le système de régulation de pression peut être incorporé dans l'équipement 50 et l'unité de contrôle 7 peut être coordonnée avec le système de régulation de pression. Une mémoire 8 à disposition de l'unité de contrôle 7 stocke des données de pression et éventuellement de température. L'unité de contrôle 7 traite ces données de pression et récupère une information représentative du volume interne de remplissage Vg occupé par le gaz, en vue d'ajuster la quantité de gaz restant dans le conteneur 2. L'unité de contrôle 7 peut aussi traiter de telles données pour les afficher sur un écran d'une interface utilisateur.

Une valve d'entrée de gaz V1, dont l'ouverture est commandée sélectivement par un module de commande 9 de l'unité de contrôle 7, est disposée sur le tronçon d'amenée de gaz 5a de la ligne 5. Le tronçon d'amenée de gaz 5a peut aussi optionnellement porter un capteur de pression 4b et un contrôleur 4c adaptés pour réguler la pression du gaz relâché depuis la source de gaz 4a vers le tronçon commun 5c de la ligne d'entrée/sortie de gaz 5. On prévoit également une valve d'admission 4d sur le tronçon d'amenée de gaz 5a de la ligne 5 entre la source 4a et la valve d'entrée V1.

Pendant la phase d'injection par le dispositif 4 d'injection de gaz, la valve d'entrée de gaz V1 est maintenue dans un état ouvert. La valve d'admission 4d est alors contrôlée par l'unité de contrôle 7 ou par un module de commande spécifique appartenant au système de régulation de pression, en fonction des données de pression détectées par le capteur de pression 6 pour alternativement admettre du gaz depuis la source 4a à l'intérieur du conteneur 2 ou interdire cette admission. Le gaz en question est par exemple de l'air ou de l'azote ($N_2$). L'injection d'air ou d'azote dans le conteneur 2 est par exemple réalisée jusqu'à atteindre dans le volume interne de remplissage Vg une surpression comprise entre 10 et 50 mbar. Par surpression, on entend une pression supérieure ambiante qu'on peut, pour généraliser, supposer égale à la pression atmosphérique.

On prévoit également une valve d'échappement de gaz V2 sur le tronçon de sortie de gaz 5b de la ligne 5 entre le tronçon commun 5c et une sortie S vers l'extérieur. La valve d'échappement de gaz V2 peut être commandée par le module de commande 9 de l'unité de contrôle 7 en fonction des données de pression détectées par le capteur de pression 6 pour alternativement relâcher du gaz depuis le conteneur 2 ou interdire ce relâchement. On peut noter que, pendant une phase de congélation, la valve d'échappement de gaz V2 peut permettre de commander un relâchement du gaz vers la sortie S.

En référence à la figure 1, une valve de prélèvement de gaz V3 est disposée dans une dérivation 5d du tronçon de sortie de gaz 5b, parallèlement à la valve d'échappement de gaz V2. Cette valve de prélèvement de gaz V3, dont l'ouverture est commandée sélectivement par un module de commande 9 de l'unité de contrôle 7, est dans un état fermé pendant la phase d'injection et pendant une phase ultérieure d'équilibrage de pression avec libre échappement de gaz. L'équipement 50 de contrôle de la circulation de gaz peut présenter des contrôleurs de valve 50a, 50b, 50c respectivement connectés aux valves V1, V2 et V3 par des lignes de contrôle filaires ou sans fil. Bien entendu, on peut aussi incorporer le contrôleur 4c dans l'équipement 50. Le module de commande 9 peut coordonner ou incorporer les contrôleurs de valve 50a, 50b, 50c. Il permet de contrôler le remplissage en gaz dans le conteneur 2 en modifiant notamment l'état des valves V1, V2, V3.

Le capteur de pression 6 est adapté pour détecter la pression du gaz dans l'espace formé par la partie supérieure de tête du conteneur 2 dans le cas non limitatif illustré sur la figure 1. Par exemple, le capteur de pression 6 va être situé dans la ligne d'entrée/sortie de gaz 5, de manière à pouvoir détecter la pression de gaz dans le tronçon commun 5c. Le capteur de pression 6 transmet des données de pression mesurée, régulièrement au cours du temps, à la mémoire 8 de l'unité de contrôle 7. On peut par exemple prévoir une ligne de transmission 6a filaire ou sans fil s'étendant depuis le capteur de pression 6 jusqu'à l'unité de contrôle 7. Le capteur de pression 6 détecte la pression dans l'espace de tête ou plus généralement dans le volume interne de remplissage Vg occupé par le gaz.

L'unité de contrôle 7 comporte ici un module d'analyse 10 pour estimer un paramètre de contrôle de remplissage de gaz. Ce paramètre est utilisé pour dimensionner un prélèvement de gaz. Pour estimer le volume interne Vg de remplissage, on peut avoir besoin de caractériser l'échappement de gaz à travers l'orifice de passage de gaz 20. Un compteur de temps 11 ("timer", par exemple formée d'une minuterie d'un type connue en soi) est en outre prévu pour délivrer à l'unité de contrôle 7 des données représentatives d'une durée caractéristique d'échappement du gaz par l'orifice de passage 20 et par la vanne d'échappement de gaz V2. Le capteur de pression 6 et l'éventuelle régulation utilisant ce capteur de pression 6 permettent de s'assurer que le niveau de surpression après une congélation du fluide biopharmaceutique B soit limité à un niveau inférieur à un seuil prédéterminé par exemple de 100 mbar, de préférence inférieur ou égal à 50 mbar. En cas de régulation, le niveau de surpression est typiquement de l'ordre de 35 mbar (0,51 psi).

Le compteur de temps 11 est activé postérieurement au remplissage par le dispositif 4 d'injection de gaz et à la congélation éventuelle, lors d'un abaissement du niveau de surpression à l'intérieur du conteneur 2.

Dans un exemple particulier de préparation du conteneur 2, on peut prévoir pour le contrôle du niveau de remplissage en gaz la succession d'étapes suivantes : remplissage de fluide biopharmaceutique B dans le conteneur via le port d'entrée 21, injection de gaz dans le conteneur 2 par le dispositif 4 d'injection de gaz (optionnellement avec une régulation), congélation optionnelle du fluide biopharmaceutique B, commande d'un flux d'échappement du gaz par ouverture de la valve d'échappement de gaz V2, estimation d'un paramètre de contrôle représentatif du volume interne de remplissage Vg pendant cet échappement de gaz et génération d'une dépression par extraction du gaz (circulation forcée) hors du conteneur 2, sachant que la durée de l'extraction est ajustée en fonction du paramètre de contrôle.

En référence à la figure 1, on peut voir que sur la dérivation 5d, un dispositif de pompage 40 est monté pour générer une dépression dans le volume interne de remplissage Vg, par circulation forcée du gaz hors du conteneur 2 lorsque la valve de prélèvement de gaz V3 est dans un état ouvert et la valve d'échappement de gaz V2 est dans un état fermé, de sorte que du gaz est évacué vers la sortie S. Le tableau 1 suivant illustre un exemple de contrôle des valves V1, V2, V3 et 4d dans le cadre de la préparation du conteneur 2.

Tableau 1

| Etats des valves pendant la préparation d'un conteneur | | | | |
|---|---|---|---|---|
| valve | V1 | V2 | V3 | 4d |
| Injection de gaz | ouvert | fermé | fermé | ouvert* |
| Echappement de gaz (libre) | fermé | ouvert | fermé | fermé |
| Génération de dépression | fermé | fermé | ouvert | fermé |
| * La valve d'admission 4d peut le cas échéant être fermée temporairement pendant la phase d'injection lorsqu'on régule la pression dans le conteneur 2. | | | | |

Lorsque la valve de prélèvement de gaz V3 est à l'état ouvert, le dispositif de pompage 40 extrait le gaz avec un débit de circulation F qui peut être constant, par exemple de l'ordre de 8 litres par minute. Pour cela, le dispositif de pompage 40 comprend typiquement une pompe à vide 60 ou dispositif similaire créant une dépression dans le tronçon commun 5c. Ce dispositif de pompage 40 peut être coordonné avec le module de commande 9 afin d'ajuster la durée de la circulation forcée en fonction du paramètre de contrôle déterminé par le module d'analyse 10. Le contrôle de la pompe à vide 60 peut être réalisé au niveau d'une interface utilisateur, avec par exemple le paramétrage du débit de la pompe à vide 60 en fonction de la capacité maximale du conteneur 2 (un débit inférieur ou égal à 1 litre par minute pouvant être considéré comme suffisant par exemple pour des capacités maximales inférieures ou égales à environ 2 litres).

On comprend ainsi que dans l'exemple non limitatif de la figure 1, la pluralité de valves (trois valves V1-V3 seulement pouvant être utilisées) se trouve soit dans une première configuration permettant une circulation du gaz dans le sens entrant, soit dans une deuxième configuration permettant une circulation du gaz dans le sens sortant. Bien que cet exemple montre l'utilisation du même orifice de passage de gaz 20 pour la circulation du gaz, on peut évidemment envisager des circulations en sens unique par utilisation de deux orifices distincts. Il est cependant considéré avantageux d'utiliser un même orifice pour le passage de gaz pour des raisons notamment de simplicité de conception du conteneur 2 et de raccordement au reste de l'installation.

Dans ce qui suit un exemple détaillé et non limitatif va être décrit en vue d'ajuster le prélèvement de gaz jusqu'à un niveau de dépression souhaité, dans le cas d'un prélèvement de 40% de matière à l'état gazeux hors du volume interne de remplissage Vg. Le terme de dépression est également utilisé par référence à la pression ambiante.

Dans un conteneur 2 tel qu'illustré à la figure 1 et ayant une capacité maximale de 119 L, le niveau de surpression en gaz inerte ou en air est par exemple mesuré à 35 mbar. Le niveau N de remplissage n'est pas connu avec exactitude et peut typiquement varier entre un cas relativement extrême de faible remplissage avec seulement 25 L de fluide biopharmaceutique B à l'état liquide (soit 27 L à l'état solide) et un remplissage au-delà de 100 L (sachant qu'un volume de 101 L de fluide biopharmaceutique à l'état liquide représente typiquement 110 L à l'état solide). Autrement dit, le volume interne de remplissage Vg occupé par le gaz peut varier entre 9L et 92 L dans l'espace de tête.

Afin de déterminer le volume interne de remplissage Vg, l'unité de contrôle 7 est paramétré à l'avance, par exemple par l'intermédiaire d'une interface utilisateur, avec un premier niveau de surpression OP1 et un deuxième deuxième niveau de surpression OP2. Dans cet exemple, les paramètres d'entrée sont choisis de la façon suivante :

- OP1 = 20mbar (niveau prédéterminé dans la gamme 1-50 mbar) ;
- OP2 = 5 mbar (niveau prédéterminé dans la gamme 1-50 mbar).

D'autres paramètres liés notamment aux dimensions de la ligne d'entrée/sortie de gaz 5 et à des dimensions caractéristiques invariables du conteneur 2 peuvent être pris en compte. L'adaptation à ces paramètres additionnels ne sera pas détaillée ici.

Le système de régulation de pression est désactivé. La valve d'échappement de gaz V2 est ouverte.

La durée $\Delta t$ d'échappement du gaz nécessaire entre la détection du premier niveau de surpression OP1 et la détection du deuxième niveau de surpression OP2 par le capteur de pression 6 est déterminée par le compteur de temps 11. On comprend que le capteur de pression 6 peut réaliser plusieurs mesures rapprochées d'un paramètre du gaz représentatif du niveau de surpression dans le volume interne de remplissage Vg, des signaux de sortie ou un signal de sortie continu étant typiquement délivrés par le capteur de pression 6 vers l'unité de contrôle 7. Par exemple, le démarrage de l'opération du compteur de temps 11 dépend d'un signal de détection du premier niveau de surpression OP1, reçu par l'unité de contrôle 7, tandis que l'arrêt de l'opération du compteur de temps 11 dépend d'un signal de détection du deuxième niveau de surpression OP2, reçu par l'unité de contrôle 7.

En l'occurrence, dans le présent exemple, la durée Δt d'échappement du gaz est égale à 50 secondes. Dans une forme de réalisation de l'unité de contrôle 7, un algorithme est prévu pour effectuer, à partir des paramètres d'entrée indiqués ci-dessus et de cette durée Δt d'échappement du gaz, un calcul du volume interne de remplissage Vg ou un paramètre de contrôle équivalent. Une routine pour la mise en oeuvre de cet algorithme est par exemple stockée dans la mémoire 8 et activée par le module d'analyse 10. Le paramètre de contrôle par le module d'analyse 10 permet de déterminer une consigne pouvant être prise en compte par le module de commande 9 pour le pompage de gaz. L'algorithme peut permettre de réaliser deux étapes de calcul successives :

- le calcul d'une constante de décroissance k, caractéristique du flux d'échappement de gaz, selon l'équation suivante :

$$k = - \ln (OP2/OP1) / \Delta t$$

où ln représente la fonction logarithme népérien.
- le calcul du volume interne de remplissage Vg par utilisation de la corrélation suivante :

$$Vg = Q / k + Vc$$

où Q est une constante de débit volumique et Vc est une constante de volume, ces deux constantes Q et Vc étant déterminées expérimentalement à partir d'expériences dans lesquelles le volume interne Vg est déjà connu pour un conteneur 2 similaire, lors d'un processus antérieur de calibration. Au cours du procédé de calibration, les paramètres Vg et l'inverse 1/k étant considérés comme les entrées pour la régression linéaire ci-dessus, on obtient expérimentalement en sortie les valeurs des constantes Q et Vc. La corrélation est en correspondance avec le modèle physique d'écoulement de gaz applicable pour l'échappement de gaz au travers de l'orifice de passage 20 et via la valve d'échappement de gaz V2.

Les deux constantes Q et Vc peuvent spécifiquement dépendre du dimensionnement de l'installation 1 et/ou de paramètres de remplissage en fluide biopharmaceutique B du conteneur 2 pouvant être considérés comme invariables. Pour cette corrélation relative au volume obtenue par régression linéaire simple, la constante Q est ici une pente ou gradient (appelée « volume estimator slope » en anglais), tandis que la constante Vc est ici l'intersection (appelée « volume estimator intercept » en anglais).
Dans des conditions d'expérimentation pour lesquelles la constante Q a été évaluée à 0,288 L/s (17,28 L/min) et la constante Vc a été évaluée à 5,066 L, et pour le cas susmentionné où la durée Δt d'échappement du gaz déterminée par l'unité de contrôle 7 est égale à 50 secondes pour passer de 20 mbar à 5 mbar, le calcul par l'algorithme permet d'obtenir une valeur de k calculée comme suit :

$$k = - \ln (5/20) / 50 = 0,00277 \text{ s}^{-1}$$

Il s'ensuit que le volume interne de remplissage Vg est estimé avec le calcul suivant à 15,5 L en prenant en compte les valeurs des constantes Q et Vc indiquées ci-dessus :

$$Vg = 0,288 / 0,0277 + 5,066$$

Lorsque l'unité de contrôle 7 dispose d'un tel paramètre de contrôle, il est alors permis d'utiliser ce paramètre de contrôle lors de la commande d'une circulation forcée de gaz entre l'orifice de passage de gaz 20 et la sortie S. Cette circulation forcée est réalisée par pompage, par exemple avec un débit de circulation F constant au niveau du dispositif de pompage 40, pendant une durée souhaitée qui prend en compte le paramètre de contrôle. Dans un exemple de réalisation, la circulation forcée est stoppée après une première durée seuil correspondant au temps nécessaire à évacuer une quantité de gaz égale à 30% de la quantité initiale contenue dans le volume interne de remplissage Vg déterminé par l'unité de contrôle 7 et avant une deuxième durée seuil correspondant au temps nécessaire à évacuer une quantité de gaz égale à 50% de cette quantité initiale tel que déterminé par l'unité de contrôle 7. En prenant une cible correspondant à 40% de la quantité de gaz, la durée souhaitée peut être calculée simplement en fonction du débit F lors du pompage. Pour un débit F égal à 8 L/min, on obtient :

$$\text{Durée souhaitée} = V_g / F \times 40/100 = 15{,}5 / 8 * 0{,}4 = 0{,}78 \text{ min} = 47 \text{ s}$$

Ce type de calcul, qui peut correspondre à une étape de calcul supplémentaire de l'algorithme, est réalisé avec l'hypothèse d'une température constante, sachant que la variation de température est négligeable dans les conditions habituelles de fonctionnement du procédé de préparation du conteneur 2. A l'issue du pompage, le conteneur 2 peut être séparé du reste de l'installation, les ports 20-22 étant fermés de manière étanche de façon connue en soi (les ports pouvant inclure des clapets ou valve anti-retour ou autre systèmes similaires de fermeture étanche).

La durée souhaitée est directement proportionnelle au pourcentage cible, ici de 40%. Un prélèvement de gaz d'environ 40% est considéré comme un excellent compromis pour faire face aux conditions extrêmes de variation de pression, dues en particulier à un changement d'altitude. Une variation de la pression du milieu ambiant engendrée par un déplacement ascensionnel de l'ordre de 3000-4000 mètres d'altitude du conteneur 2 fermé de manière étanche peut ainsi être avantageusement absorbée par la dépression initiale dans le conteur 2 préparé de la façon décrite ci-dessus.

Le fait d'évacuer le gaz de façon libre (tendant vers un niveau sans surpression) puis de retirer sélectivement une fraction souhaitée du gaz restant, n'est pas seulement avantageux dans le cas d'un conditionnement avec congélation préalable. En effet, dans le cas de certains liquides réactifs dans des conditions de pressurisation du gaz (par exemple réactivité en présence d'air), il est souhaitable également en pratique de retirer une fraction du gaz dans le volume interne de remplissage $V_g$ avant le transport.

En variante, le paramètre de contrôle de remplissage de gaz peut être déterminé au cours d'un processus de congélation du contenu du conteneur. Dans cette variante, au cours du processus de congélation, le capteur de pression 6 mesure régulièrement la pression interne au conteneur 2 au cours du temps. On notera que, dans le cas présent, on considère le conteneur fermé pendant l'intégralité du processus de congélation.

Lorsque la quantité de matière à l'état gazeux est constante, on peut utiliser une loi mettant en relation le volume de gaz et la pression mesurée. Par exemple, on utilise la loi des gaz parfaits, mais des lois plus complexes sont envisageables. Pour la loi des gaz parfaits, à titre illustratif, le volume V s'écrit, en fonction de la pression P, de la manière suivante : $V=k_g/P$, où $k_g$ est considérée comme constante au cours du temps. En particulier $k_g=nRT$, où T est la température, considérée comme sensiblement constante au cours de la congélation, n est le nombre de moles gazeuses, et R la constante des gaz parfaits.

Par conséquent, la variation de volume en fonction du temps s'écrit par $dV/dt=k_g.d(1/P)/dt$, où 1/P désigne la fonction inverse de la pression, $d(1/P)/dt$ désigne la dérivée en fonction du temps de cette fonction, et dV/dt la dérivée du volume en fonction du temps.

Ainsi, à partir de la mesure de la valeur de P au cours du temps, le module d'analyse 10 peut déterminer la fonction 1/P au cours du temps, et dériver cette fonction. La fonction dérivée peut être filtrée par un filtre approprié pour éliminer certains bruits de mesure. L'intégration au cours du temps de la fonction dérivée filtrée permet de déterminer la variation de volume gazeux au cours du processus de congélation. Cette variation de volume gazeux peut être utilisée comme paramètre de contrôle pour déterminer les caractéristiques du pompage. Par exemple, en intégrant cette courbe au cours du temps, on peut déterminer le volume de gaz à l'issue du processus de congélation.

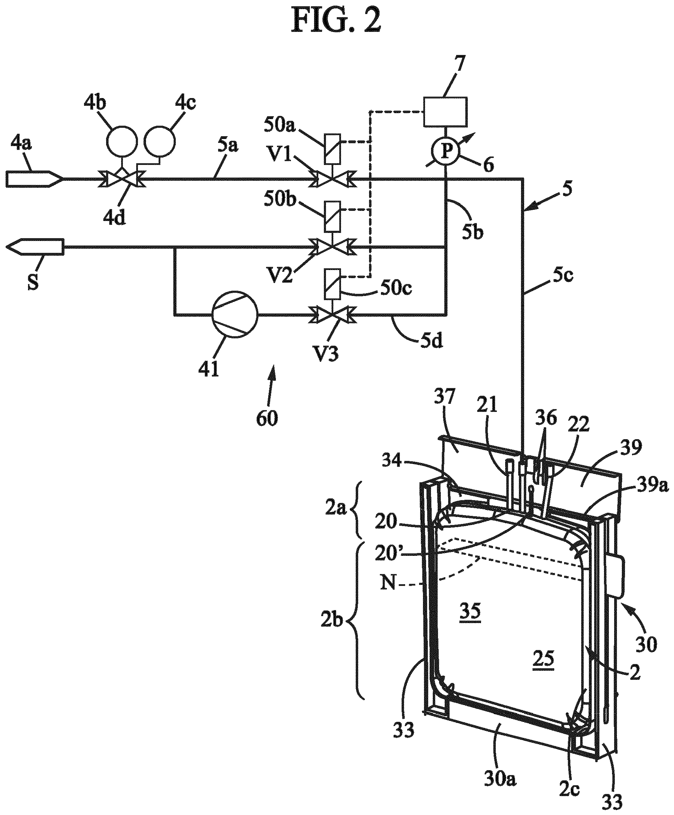

Une installation avec un autre type de conteneur 2, spécialement adapté pour subir un traitement thermique, va à présent être décrite en référence à la figure 2.

L'unité de stockage à usage biopharmaceutique présente ici un conteneur 2 flexible, réceptionné et maintenu extérieurement dans une structure 30 rigide de réception et de maintien. Le conteneur 2 flexible comporte une enveloppe 25 souple qui limite un espace intérieur, apte à recevoir le contenu et ici le recevant effectivement.

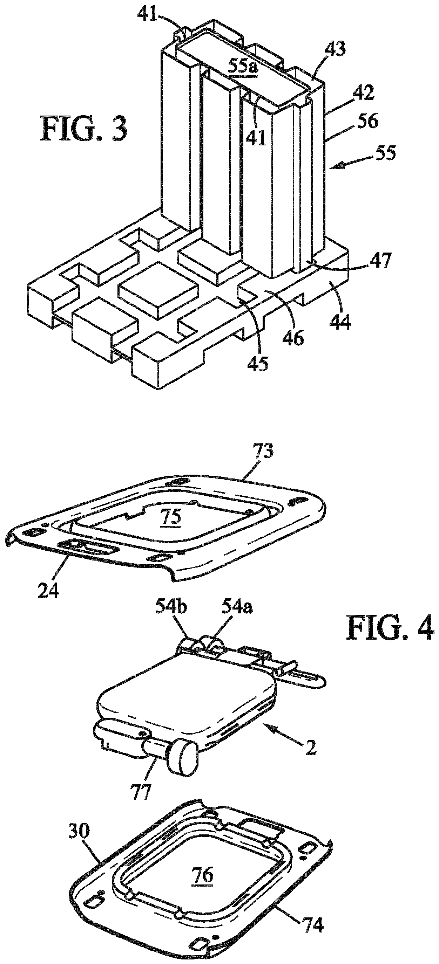

Un tel conteneur 2, comme celui susceptible d'être utilisé avec le système de la figure 3 est typiquement une poche 3D avec un volume de l'espace intérieur pouvant être de 50 litres au moins, jusqu'à 3.000 litres, voire plus. Une telle poche 3D est décrite dans le document WO00/04131A1 ou commercialisée sous la marque FLEXEL® 3D. Des conteneurs de plus petits volumes existent également, comme ceux présentés sur la figure 4.

Le conteneur 2 flexible est le plus souvent pourvu de ports comme dans le premier mode de réalisation, tel que, par exemple, le port d'entrée 21 pour l'introduction d'un produit à mélanger au contenu du conteneur 2, situé dans la partie supérieure 2a, le port de sortie 22 pour l'évacuation de produit mélangé depuis le conteneur 2, un orifice de passage de gaz ou port 20, le cas échéant un port 20' permettant le montage d'un organe fonctionnel ou de moyens de mesure, par exemple d'un paramètre reflétant ou en relation avec l'homogénéité, l'hétérogénéité ou le mélange du contenu de l'espace intérieur.

On comprend que le conditionnement de l'intérieur du conteneur 2 peut être réalisée de façon analogue, par des moyens analogues à ce qui été décrit en référence à la figure 1. L'unité de contrôle 7 montrée sur la figure 2 peut ainsi être similaire ou fonctionnellement identique à celle montrée sur la figure 1, en vue d'ajuster le prélèvement de gaz jusqu'à un niveau de dépression souhaité. Le descriptif du dispositif 4 d'injection de gaz, des valves V1-V3 et du dispositif de pompage 40 n'est donc pas répété et on comprend que l'estimation du paramètre de contrôle peut être identique ou analogue à ce qui a été décrit précédemment. Dans ce qui suit on détaillera donc seulement pour ce second mode de réalisation les spécificités de conception qui concernent l'unité de stockage du fluide biopharmaceutique B.

En référence à la figure 2, la structure 30 rigide de réception et de maintien comprend typiquement, en situation, une paroi inférieure de fond 30a, disposée horizontalement, et une paroi latérale 33, disposée verticalement, et une ouverture 34 en partie supérieure pour la mise en place et l'enlèvement du conteneur 2 flexible. La structure 30 rigide de réception et de maintien délimite un espace intérieur 35 accessible par l'ouverture 34. Dans cet espace 35 est réceptionné et maintenu extérieurement le conteneur 2 flexible dont l'enveloppe 25 souple est apte à venir s'appliquer par sa partie inférieure 2b et par sa partie latérale 2c sur la face intérieure de la paroi de fond 30a et de la paroi latérale 33. En outre, La structure 30 rigide de réception et de maintien est le plus souvent pourvue d'orifices 36 avec lesquels peuvent coopérer les ports du conteneur 2 flexible. Le cas échéant, la structure 30 rigide de réception et de maintien comporte également des moyens de contention 37 aptes à venir s'appliquer sur la partie supérieure 2a du conteneur 2 flexible.

Les moyens de contention 37 peuvent par exemple comprendre un volet de contention 39 articulé sur les parois latérale 33 au moyen d'une charnière 39a entre une position ouverte, visible sur la figure 2, et une position fermée où le volet 39 s'étend sensiblement horizontalement et est verrouillé pour maintenir le conteneur 2 dans l'espace intérieur 35. Le volet 39 comprend des fentes débouchantes comprenant les orifices 36 permettant l'accès aux ports 20-22 et 20'.

Dans leurs principes, l'agencement et la réalisation d'une telle unité de stockage rigide (avec réception et maintien du conteneur 2 flexible) font partie des connaissances générales de l'homme du métier ou sont à sa portée. Dans tous les cas, la structure 30 rigide de réception et de maintien est rigide et constitue une partie fixe et indéformable sur laquelle prend appui le conteneur 2 flexible. Bien entendu, l'unité de stockage peut être transportée, et éventuellement démontée ou pliée.

En variante et comme illustré sur la figure 3, on peut remplacer une telle structure rigide 30 par un réceptacle 55 rigide ouvert à son extrémité supérieure et définissant une cavité 55a. Cela peut être en particulier le cas pour des conteneurs de plus petites dimensions, de l'ordre de quelques litres (1 à 5 litres environ) plus facilement manipulables. Dans un tel cas, on peut placer le conteneur 2 dans le réceptacle 5 rigide, pour la manipulation.

La figure 3 montre un tel réceptacle 55 spécialement adapté pour recevoir un conteneur 2 chargé avec un fluide biopharmaceutique B tel que décrit ci-dessus. Le réceptacle 55 comprend un corps 56 définissant la cavité 55a. Le corps 56 comprend une paroi interne 41 s'étendant depuis une extrémité supérieure ouverte vers un fond inférieur. La paroi interne 41 définit une surface de contact pour le conteneur 2. Le corps 56 comprend également une paroi externe 42 s'étendant entre une extrémité supérieure au niveau de l'extrémité supérieure de la paroi interne 41 vers le bas. La paroi interne 41 et la paroi externe 42 définissent entre elles une pluralité de poches 43, qui sont des cavités s'étendant entre la paroi interne 41 et la paroi externe 42 de haut en bas. On peut par exemple prévoir que la paroi interne 41 soit sensiblement plane sur chaque côté longitudinal de la cavité 55a, et que, sur ce même côté, la paroi externe 42 présente un profil uniforme en créneaux, chaque créneau définissant avec la paroi interne 41 une poche 43.

En référence à la figure 3, l'unité de traitement thermique servant à réaliser la congélation peut comprendre un socle 44 sur lequel est posé le réceptacle 55. On peut par exemple prévoir un maintien mécanique du réceptacle 55 sur le socle 44. Par exemple, le réceptacle 55 et le socle 44 coopèrent par complémentarité de formes. Dans l'exemple présenté, le socle 44 comprend une rainure 45 dans sa face supérieure 46. Le réceptacle 55 comprend une partie 47 faisant saillie et insérée dans la rainure 45. Par exemple, la partie 47 faisant saillie est prévue sur chaque petit côté latéral de la paroi externe 42. Ainsi, les parties 47 faisant saillie sont insérées dans la rainure 45 formées dans la face supérieure 46 du socle 47, et le fond des poches 43 repose sur cette face supérieure 46.

On a décrit ici un socle 44 accueillant un réceptacle 55. Comme on peut le voir sur la figure 3, le socle 44 peut accueillir plusieurs réceptacles 55, qui seront placés par exemple de manière adjacente les uns aux autres sur le socle 44. C'est-à-dire que l'unité de traitement thermique peut appliquer un traitement thermique à plusieurs conteneurs 2 simultanément.

Le procédé de traitement thermique peut ainsi être réalisé par exemple comme décrit dans le document WO 2011/063381, par utilisation d'éléments applicateurs entrant dans les poches 43, le conteneur 2 ayant été préalablement placé dans le réceptacle 55. Au bout d'un certain temps, une fois le traitement thermique terminé, les éléments applicateurs peuvent être retirés de la manière inverse de la manière par laquelle ils ont été insérés.

L'invention a été décrite ci-dessus pour un mode de réalisation particulier de conteneurs 2 et d'appareil 3 de conditionnement. Toutefois, l'invention n'est pas limitée à ces réalisations. En variante, on pourra utiliser d'autres types de conteneurs, et/ou d'autres types d'équipements de conditionnement.

Par exemple, dans un mode de réalisation particulier, le conteneur 2 pourra être réalisé rigide ou indéformable au moins dans une partie enveloppant la majorité du fluide biopharmaceutique B. On peut utiliser comme paramètre de contrôle macroscopique au moins un niveau de pression dans l'espace de tête du conteneur 2 sans avoir à déterminer spécifiquement le volume interne de remplissage Vg occupé par le gaz. Dans un autre mode de réalisation particulier, l'enveloppe 25 du conteneur 2 pourra être réalisé extensible. On peut utiliser comme paramètre de contrôle un paramètre combinant la pression dans l'espace de tête du conteneur 2 et le volume de l'enveloppe 25.

La figure 4 représente encore un autre exemple de réalisation d'unité de stockage à fluide biopharmaceutique B. Comme dans les modes de réalisation précédents, ce conteneur 2 comprend une enveloppe et une structure 30. La structure 30 est ici réalisée en deux parties 73 et 74 indépendantes assemblables l'une à l'autre, le conteneur 2 étant disposé entre les deux parties 73 et 74. Dans cet exemple, chaque partie 73 est réalisée sous la forme d'une coque formant un cadre définissant une ouverture centrale, 75, 76 respectivement, par laquelle le conteneur 2 dépasse. La portion de tête du conteneur 2 est équipée de deux lignes de remplissage et de vidange 54a et 54b qui sont disposées entre les deux parties 73 et 74 formant coque et protégées par celles-ci. La ou les lignes d'entrée/sortie de gaz 5 ne sont pas représentées dans cet exemple, mais peuvent être fournies de manière parallèle. La partie de fond du conteneur 2 flexible peut être équipé d'un port 77 où on peut monter un capteur de température local, ou toute autre instrumentation souhaitée.

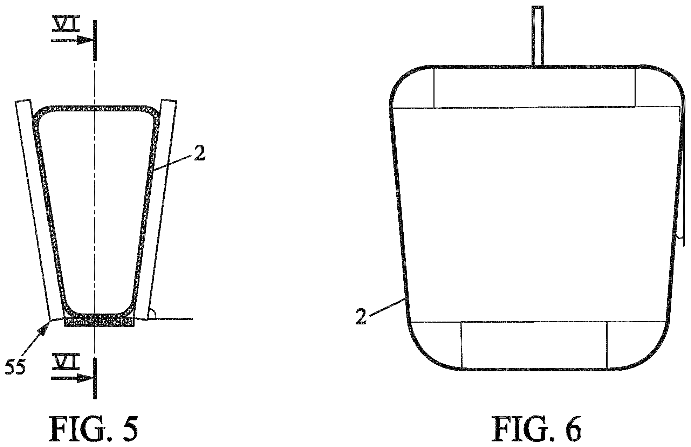

Les figures 5 et 6 représentent encore une variante de réalisation, respectivement en vue de côté et de face. Selon ce mode de réalisation, une différence avec les exemples précédents est que le réceptacle 55 de l'installation de traitement thermique présente, en vue transversale, une forme légèrement évasée en s'élargissant vers le haut selon l'axe vertical. L'unité de stockage peut présenter une forme adaptée à cette forme de réceptacle. En particulier, le conteneur 2 peut présenter une largeur supérieure en partie supérieure qu'en partie inférieure. Par ailleurs, comme visible sur la figure 6, le réceptacle 55 de l'installation de traitement thermique peut présenter, en vue transversale orthogonale, une forme légèrement évasée en s'élargissant vers le haut selon l'axe vertical, également. L'unité de stockage peut présenter une forme adaptée à cette forme de réceptacle. En particulier, le conteneur 2 peut présenter une largeur supérieure en partie supérieure qu'en partie inférieure également selon cette vue. La structure 30 de l'unité de stockage est adaptée à la forme du conteneur 2. L'intérêt de cette forme évasée est de fournir un meilleur contrôle de la propagation du front de congélation lors du passage du fluide de l'état liquide à l'état solide lors d'un traitement thermique de congélation.

Un des avantages de préparer le conteneur avec un ajustement de la dépression dans le volume interne de remplissage Vg occupé par le gaz est qu'il n'est pas nécessaire d'avoir une connaissance de la masse, de la densité ou du volume du fluide biopharmaceutique. Le procédé de préparation permet ainsi un conditionnement avec une dépression suffisante pour anticiper de manière fiable (et sans intervention manuelle d'un opérateur sur le conteneur 2) les possibles variations de pression, y compris avec la possibilité d'anticiper les variations dans les conditions de transport les plus extrêmes.

**Revendications**

**1.** Installation (1) pour la préparation d'un conteneur chargé avec un fluide biopharmaceutique comprenant :

- un conteneur (2) étanche dans lequel est placé un fluide biopharmaceutique (B) et un gaz qui occupe un volume interne de remplissage (Vg), le conteneur comprenant un orifice de passage de gaz (20) et étant adapté pour être rempli en gaz avec un niveau initial de surpression dans le volume interne de remplissage (Vg) ;
- un module de commande (9) pour contrôler un remplissage en gaz dans le conteneur (2) ;
- un module d'analyse (10) pour estimer un paramètre de contrôle de remplissage de gaz qui est représentatif dudit volume interne de remplissage (Vg); ladite installation comporte un dispositif de pompage (40) pour générer une dépression dans le volume interne de remplissage (Vg) par circulation forcée du gaz hors du conteneur (2) via l'orifice de passage de gaz (20), le module de commande (9) et le dispositif de pompage (40) étant coordonnés pour ajuster la durée de la circulation forcée en fonction du paramètre de contrôle déterminé par le module d'analyse (10).

**2.** Installation selon la revendication 1, **caractérisée** en ce le module de commande (9) est adapté pour commander sélectivement un flux d'échappement du gaz via l'orifice de passage de gaz (20) du conteneur (2), de façon à réduire le niveau de surpression dans le volume interne de remplissage (Vg), **et en ce que** le paramètre de contrôle de remplissage de gaz est représentatif dudit volume interne de remplissage (Vg), le module d'analyse (10) étant configuré pour estimer ledit paramètre de contrôle en surveillant le flux d'échappement du gaz, entre un premier niveau de surpression OP1 et un deuxième niveau de surpression OP2 dans le volume interne de remplissage.

**3.** Installation selon la revendication 2, dans laquelle le module d'analyse comprend ou est relié à un compteur de temps adapté pour déterminer la durée d'échappement du gaz Δt nécessaire pour descendre du premier niveau de surpression OP1 au deuxième niveau de surpression OP2.

**4.** Installation selon l'une quelconque des revendications 2 ou 3, dans laquelle le module d'analyse (10) détermine, en tant que paramètre de contrôle, le volume interne de remplissage (Vg) selon la corrélation suivante :

$$Vg = Q / k + Vc$$

où :

- Vg est le volume interne de remplissage occupé par le gaz ;
- Q est une constante de débit volumique ;
- Vc est une constante de volume ;
- k est un constante de décroissance ;
- sachant que la constante de décroissance est calculé selon l'équation :

$$k = - \ln (OP2/OP1) / \Delta t$$

- OP1 le premier niveau de surpression à l'intérieur du conteneur ;
- OP2 le deuxième niveau de surpression à l'intérieur du conteneur ;
- Δt la durée d'échappement du gaz pour descendre du premier niveau de surpression OP1 au deuxième niveau de surpression OP2 ;
- ln représentant la fonction logarithme népérien.

5. Installation selon l'une des revendications 1 à 4, comprenant en outre une pluralité de valves (V1, V2, V3) comprenant des valves commandées sélectivement par le module de commande (9) et présentant :

- une première configuration permettant une circulation du gaz dans un sens entrant dans le conteneur (2) ; et
- une deuxième configuration permettant une circulation du gaz dans un sens sortant du conteneur (2) ;

le module de commande (9) étant adapté pour paramétrer successivement la première configuration afin de permettre au conteneur (2) d'être rempli en gaz jusqu'à un état de surpression dans ledit volume interne de remplissage (Vg) et la deuxième configuration afin de permettre un échappement du gaz hors du conteneur (2) via son orifice de passage de gaz (20) au plus jusqu'à un état sans surpression dans ledit volume interne de remplissage (V).

6. Installation selon la revendication 5, comprenant en outre l'une et/ou l'autre des caractéristiques suivantes :

- ladite pluralité de valves (V1, V2, V3) comprend une première valve d'entrée de gaz (V1) sélectivement ouverte par le module de commande (9) dans la première configuration et une deuxième valve d'échappement de gaz (V2) sélectivement ouverte par le module de commande (9) dans la deuxième configuration, la valve d'entrée de gaz et la valve d'échappement de gaz étant en communication fluidique avec ledit orifice de passage de gaz (20) ;
- le dispositif de pompage (40) comporte une pompe à vide (60) et une troisième valve de prélèvement de gaz (V3) faisant partie de ladite pluralité de valves (V1, V2, V3), le module de commande (9) étant configuré pour ouvrir sélectivement la valve de prélèvement de gaz (V3) et fermer la valve d'entrée de gaz (V1) et la valve d'échappement de gaz (V2) lorsque la pompe à vide (60) est actionnée.

7. Installation selon l'une quelconque des revendications précédentes, dans laquelle le module d'analyse (10) comporte ou est relié à un capteur de pression (6) en communication fluidique avec l'orifice de passage de gaz (20) et adapté pour mesurer un niveau de surpression à l'intérieur du conteneur (2).

8. Installation selon l'une quelconque des revendications précédentes, comportant un dispositif (4) d'injection de gaz adapté pour injecter du gaz, de préférence sous pression, dans le conteneur (2) par ledit orifice de passage de gaz (20) avant la détermination du paramètre de contrôle ;
et optionnellement dans laquelle le dispositif (4) d'injection de gaz, le dispositif de pompage (40) et une unité de contrôle (7) comprenant le module de commande (9) et le module d'analyse (10) sont incorporés dans un appareil (3) de conditionnement de l'intérieur du conteneur.

9. Installation selon l'une quelconque des revendications précédentes, dans laquelle le conteneur (2) est flexible et fermé de manière étanche, le conteneur comprenant des parois en matière plastique imperméable aux gaz.

**10.** Procédé de préparation d'un conteneur (2) étanche chargé avec un fluide biopharmaceutique (B), un gaz occupant un volume interne de remplissage (Vg) à l'intérieur du conteneur avec un niveau initial de surpression, dans lequel on contrôle un niveau de remplissage en gaz dans le conteneur, le procédé comprenant les étapes consistant essentiellement à :

> b) estimer un paramètre de contrôle de remplissage de gaz qui est représentatif dudit volume interne de remplissage (Vg),
> c) générer une dépression dans le volume interne de remplissage (Vg) par circulation forcée du gaz hors du conteneur (2), la durée de la circulation forcée étant ajustée en fonction dudit paramètre de contrôle.

**11.** Procédé selon la revendication 10, dans lequel la circulation forcée est réalisée par pompage avec un débit constant, la circulation forcée étant stoppée après une première durée seuil correspondant au temps nécessaire à évacuer une quantité de gaz égale à 30% de la quantité initiale de gaz contenue dans le volume interne de remplissage (Vg) déterminé à l'étape b) et avant une deuxième durée seuil correspondant au temps nécessaire à évacuer une quantité de gaz égale à 50% de la quantité initiale de gaz contenue dans le volume interne de remplissage (Vg) déterminé à l'étape b).

**12.** Procédé selon la revendication 10 ou 11, comprenant en outre l'étape suivante avant l'étape b) :

> a) commander sélectivement un flux d'échappement du gaz via un orifice de passage de gaz (20) du conteneur, de façon à abaisser le niveau de surpression à l'intérieur du conteneur (2) ; et dans lequel b) estimer comprend surveiller le flux d'échappement du gaz entre un premier niveau de surpression OP1 et un deuxième niveau de surpression OP2 dans le volume interne de remplissage.

**13.** Procédé selon la revendication 12, dans lequel ledit paramètre de contrôle est estimé en déterminant la durée d'échappement du gaz $\Delta t$ nécessaire pour descendre du premier niveau de surpression OP1 au deuxième niveau de surpression OP2.

**14.** Procédé selon l'une quelconque des revendications 10 à 13, comprenant avant l'étape a) les étapes consistant essentiellement à :

> - injecter un gaz, de préférence de l'air ou de l'azote, dans le conteneur (2) jusqu'à atteindre dans le volume interne de remplissage (Vg) une surpression comprise entre 10 et 50 mbar ; et
> - congeler le fluide biopharmaceutique.

**15.** Procédé selon l'une quelconque des revendications 10 à 14, dans lequel l'étape b) est réalisée lorsqu'une valve d'échappement de gaz (V2) en communication fluidique avec l'orifice de passage de gaz (20) est sélectivement ouverte, ladite valve d'échappement de gaz (V2) étant ouverte jusqu'à égaliser la pression entre le volume interne de remplissage (Vg) et le milieu ambiant, plusieurs mesures d'un paramètre du gaz représentatif d'un niveau de surpression dans le volume interne de remplissage étant réalisées pendant l'étape b).

**Patentansprüche**

**1.** Anlage (1) zur Bereitstellung eines Behälters, der mit einem biopharmazeutischen Fluid beladen ist, umfassend:

> - einen dichten Behälter (2), in dem ein biopharmazeutisches Fluid (B) und ein Gas platziert sind, das ein inneres Füllvolumen (Vg) einnimmt, wobei der Behälter eine Öffnung für den Durchlass von Gas (20) umfasst und geeignet ist, mit Gas mit einem Anfangsüberdruckpegel in dem inneren Füllvolumen (Vg) gefüllt zu werden;
> - ein Steuermodul (9), um ein Füllen mit Gas in dem Behälter (2) zu steuern;
> - ein Analysemodul (10), um einen Steuerparameter des Füllens mit Gas zu schätzen, der für das innere Füllvolumen (Vg) repräsentativ ist;

> wobei die Anlage eine Pumpvorrichtung (40) umfasst, um einen Unterdruck in dem inneren Füllvolumen (Vg) durch einen Zwangsumlauf des Gases außerhalb des Behälters (2) über die Gasdurchlassöffnung (20) zu erzeugen, wobei das Steuermodul (9) und die Pumpvorrichtung (40) koordiniert sind, um die Dauer des Zwangsumlaufs als Funktion des Steuerparameters einzustellen, der von dem Analysemodul (10) bestimmt wird.

**2.** Anlage nach Anspruch 1, **dadurch gekennzeichnet, dass** das Steuermodul (9) geeignet ist, selektiv einen Austrittsstrom des Gases über die Gasdurchlassöffnung (20) des Behälters (2) zu steuern, um den Überdruckpegel in dem inneren Füllvolumen (Vg) zu reduzieren, und dadurch, dass der Steuerparameter des Füllens mit Gas für das innere Füllvolumen (Vg) repräsentativ ist, wobei das Analysemodul (10) ausgelegt ist, um den Steuerparameter durch Überwachung des Austrittsstroms des Gases zwischen einem ersten Überdruckpegel OP1 und einem zweiten Überdruckpegel OP2 in dem inneren Füllvolumen zu schätzen.

**3.** Anlage nach Anspruch 2, wobei das Analysemodul einen Zeitzähler umfasst oder mit diesem verbunden ist, der geeignet ist, die Dauer des Austritts des Gases Δt zu bestimmen, die notwendig ist, um von dem ersten Überdruckpegel OP1 auf den zweiten Überdruckpegel OP2 zu sinken.

**4.** Anlage nach einem der Ansprüche 2 oder 3, wobei das Analysemodul (10) als Steuerparameter das innere Füllvolumen (Vg) gemäß der folgenden Korrelation bestimmt:

$$Vg = Q / k + Vc$$

wobei:

- Vg das innere Füllvolumen ist, das von dem Gas eingenommen wird;
- Q eine Konstante des Volumendurchsatzes ist;
- Vc eine Volumenkonstante des Volumens ist;
- k eine Abfallkonstante ist;
- mit der Maßgabe, dass die Abfallkonstante berechnet wird gemäß der Gleichung:

$$k = - \ln (OP2/OP1) / \Delta t$$

- OP1 der erste Überdruckpegel im Inneren des Behälters;
- OP2 der zweite Überdruckpegel im Inneren des Behälters;
- Δt die Dauer des Austritts des Gases, um von dem ersten Überdruckpegel OP1 auf den zweiten Überdruckpegel OP2 zu sinken;
- ln die natürliche Logarithmusfunktion repräsentiert.

**5.** Anlage nach einem der Ansprüche 1 bis 4, ferner umfassend mehrere Ventile (V1, V2, V3), die selektiv von dem Steuermodul (9) gesteuerte Ventile umfassen und aufweisen:

- eine erste Konfiguration, die einen Umlauf des Gases in einer in den Behälter (2) eintretenden Richtung gestattet; und
- eine zweite Konfiguration, die einen Umlauf des Gases in einer aus dem Behälter (2) austretenden Richtung gestattet;

wobei das Steuermodul (9) geeignet ist, aufeinanderfolgend zu parametrieren: die erste Konfiguration, um zu gestatten, dass der Behälter (2) mit Gas bis zu einem Zustand des Überdrucks in dem inneren Füllvolumen (Vg) gefüllt wird, und die zweite Konfiguration, um einen Austritt des Gases aus dem Behälter (2) über seine Gasdurchlassöffnung (20) höchstens bis zu einem Zustand ohne Überdruck in dem inneren Füllvolumen (Vg) zu gestatten.

**6.** Anlage nach Anspruch 5, ferner umfassend eine und/oder beide der folgenden Merkmale:

- die Vielzahl von Ventile (V1, V2, V3) umfassen ein erstes Gaseintrittsventil (V1), das selektiv von dem Steuermodul (9) in der ersten Konfiguration geöffnet wird, und ein zweites Gasaustrittsventil (V2), das selektiv von dem Steuermodul (9) in der zweiten Konfiguration geöffnet wird, wobei das Gaseintrittsventil und das Gasaustrittsventil mit der Gasdurchlassöffnung (20) in fluidleitender Verbindung stehen;
- die Pumpvorrichtung (40) umfasst eine Vakuumpumpe (60) und ein drittes Gasentnahmeventil (V3), das einen Teil der Vielzahl von Ventile (V1, V2, V3) bildet, wobei das Steuermodul (9) ausgelegt ist, selektiv das Gasentnahmeventil (V3) zu öffnen und das Gaseintrittsventil (V1) und das Gasaustrittsventil (V2) zu schließen, wenn die Vakuumpumpe (60) betätigt wird.

**7.** Anlage nach einem der vorhergehenden Ansprüche, wobei das Analysemodul (10) einen Drucksensor (6) umfasst oder mit diesem verbunden ist, welcher in fluidleitender Verbindung mit der Gasdurchlassöffnung (20) steht und geeignet ist, um einen Überdruckpegel im Inneren des Behälters (2) zu messen.

**8.** Anlage nach einem der vorhergehenden Ansprüche, umfassend eine Gasinjektionsvorrichtung (4), die geeignet ist, um Gas, vorzugsweise unter Druck, in den Behälter (2) durch die Gasdurchlassöffnung (20) vor der Bestimmung des Steuerparameters zu injizieren;
und wobei gegebenenfalls die Gasinjektionsvorrichtung (4), die Pumpvorrichtung (40) und eine Steuereinheit (7), die das Steuermodul (9) und das Analysemodul (10) umfasst, in einer Einrichtung (3) zur Konditionierung des Inneren des Behälters eingebaut sind.

**9.** Anlage nach einem der vorhergehenden Ansprüche, wobei der Behälter (2) flexibel und dicht verschlossen ist, wobei der Behälter Wände aus gasundurchlässigem Kunststoffmaterial umfasst.

**10.** Verfahren zur Bereitstellung eines dichten Behälters (2), der mit einem biopharmazeutischen Fluid (B) beladen ist, wobei ein Gas ein inneres Füllvolumen (Vg) im Inneren des Behälters mit einem Anfangsüberdruckpegel einnimmt, wobei ein Gasfüllpegel in dem Behälter gesteuert wird, wobei das Verfahren die Schritte umfasst, die im Wesentlichen bestehen aus:

b) Schätzen eines Steuerparameters des Füllens mit Gas, der für das innere Füllvolumen (Vg) repräsentativ ist;
c) Erzeugen eines Unterdrucks in dem inneren Füllvolumen (Vg) durch einen Zwangsumlauf des Gases außerhalb des Behälters (2), wobei die Dauer des Zwangsumlaufs als Funktion des Steuerparameters eingestellt wird.

**11.** Verfahren nach Anspruch 10, wobei der Zwangsumlauf durch Pumpen mit einem konstanten Durchsatz vorgenommen wird, wobei der Zwangsumlauf gestoppt wird nach einer ersten Schwellendauer, die der Zeit entspricht, welche notwendig ist, um eine Gasmenge von 30 % der Anfangsgasmenge zu evakuieren, die in dem inneren Füllvolumen (Vg) enthalten ist, das in Schritt b) bestimmt wird, und vor einer zweiten Schwellendauer, die der Zeit entspricht, welche notwendig ist, um eine Gasmenge von 50 % der Anfangsgasmenge zu evakuieren, die in dem inneren Füllvolumen (Vg) enthalten ist, das in Schritt b) bestimmt wird.

**12.** Verfahren nach Anspruch 10 oder 11, ferner umfassend den folgenden Schritt vor Schritt b):

a) selektives Steuern eines Gasaustrittsstroms über eine Gasdurchlassöffnung (20) des Behälters, um den Überdruckpegel im Inneren des Behälters (2) zu senken; und wobei b) Schätzen eines Überwachens des Gasaustrittsstroms zwischen einem ersten Überdruckpegel OP1 und einem zweiten Überdruckpegel OP2 in dem inneren Füllvolumen umfasst.

**13.** Verfahren nach Anspruch 12, wobei der Steuerparameter geschätzt wird, indem die Gasaustrittsdauer $\Delta t$ bestimmt wird, die notwendig ist, um von dem ersten Überdruckpegel OP1 auf den zweiten Überdruckpegel OP2 zu sinken.

**14.** Verfahren nach einem der Ansprüche 10 bis 13, umfassend vor Schritt a) die Schritte, die im Wesentlichen bestehen aus:

- Injizieren von Gas, vorzugsweise Luft oder Stickstoff, in den Behälter (2) bis zum Erzielen eines Überdrucks zwischen 10 und 50 mbar in dem inneren Füllvolumen (Vg); und
- Tieffrieren des biopharmazeutischen Fluids.

**15.** Verfahren nach einem der Ansprüche 10 bis 14, wobei Schritt b) durchgeführt wird, wenn ein Gasaustrittsventil (V2) in fluidleitender Verbindung mit der Gasdurchlassöffnung (20) selektiv geöffnet wird, wobei das Gasaustrittsventil (V2) geöffnet wird, bis der Druck zwischen dem inneren Füllvolumen (Vg) und der Umgebung ausgeglichen wird, wobei mehrere Messungen eines Parameters des Gases, der für einen Überdruckpegel in dem inneren Füllvolumen repräsentativ ist, während Schritt b) durchgeführt werden.

**Claims**

**1.** Facility (1) for the preparation of a container loaded with a biopharmaceutical fluid, comprising:

- a fluidtight container (2) in which is placed a biopharmaceutical fluid (B) and a gas which occupies an inner filling space (Vg), the container comprising a gas passage opening (20) and being adapted to be filled with gas to an initial level of positive pressure in the inner filling space (Vg);
- a control module (9) for controlling the filling of the container (2) with gas;
- an analysis module (10) for estimating a gas filling control parameter which is representative of said inner filling space (Vg);

said facility (1) comprises a pumping means (40) for generating a negative pressure in the inner filling space (Vg) by forcing the gas to flow out of the container (2) via the gas passage opening (20), the control module (9) and the pumping means (40) being coordinated to adjust the duration of the forced flow on the basis of the control parameter determined by the analysis module (10).

2. Facility according to claim 1, **characterized in that** the control module (9) is adapted to selectively control a flow of released gas through the gas passage opening (20) of the container (2), so as to reduce the pressure level in the inner filling space (Vg), and **in that** the gas filling control parameter is representative of said inner filling space (Vg), the analysis module (10) being configured to estimate said control parameter by monitoring the flow of released gas between a first level of positive pressure OP1 and a second level of positive pressure OP2 in the inner filling space.

3. Facility according to claim 2, wherein the analysis module comprises or is connected to a timer adapted to determine the duration of the gas release Δt required to drop from the first level of positive pressure OP1 to the second level of positive pressure OP2.

4. Facility according to any of claims 2 or 3, wherein the analysis module (10) determines, as the control parameter, the inner filling space (Vg) using the following correlation:

$$Vg = Q/k + Vc$$

where:

- Vg is the inner filling space occupied by the gas;
- Q is a volumetric flow rate constant;
- Vc is a volume constant;
- k is a decay constant;
- knowing that the decay constant is calculated using the equation:

$$k = - \ln (OP2/OP1)/\Delta t$$

with
- OP1 being the first level of positive pressure inside the container;
- OP2 the second level of positive pressure inside the container;
- Δt being the duration of the gas release required to drop from the first level of positive pressure OP1 to the second level of positive pressure OP2;
- ln representing the natural logarithm function.

5. Facility according to any of claims 1 to 4, further comprising a plurality of valves (V1, V2, V3) comprising valves selectively controlled by the control module (9) and having:

- a first configuration permitting the flow of gas in an incoming direction into the container (2); and
- a second configuration permitting the flow of gas in an outgoing direction from the container (2);

the control module (9) being adapted to successively configure the first configuration to enable the container (2) to be filled with gas to a state of positive pressure within said inner filling space (Vg), and the second configuration to enable gas to escape from the container (2) via its gas passage opening (20) at most until a state of pressure equilibrium is reached in said inner filling space (V).

6.  Facility according to claim 5, further comprising one and/or the other of the following characteristics:

    - said plurality of valves (V1, V2, V3) comprises a first gas inlet valve (V1) selectively opened by the control module (9) in the first configuration and a second gas release valve (V2) selectively opened by the control module (9) in the second configuration, the gas inlet valve and the gas release valve being in fluid communication with said gas passage opening (20);
    - the pumping means (40) comprises a vacuum pump (60) and a third gas removal valve (V3) that is one among said plurality of valves (V1, V2, V3), the control module (9) being configured for selectively opening the gas removal valve (V3) and closing the gas inlet valve (V1) and the gas release valve (V2) when the vacuum pump (60) is actuated.

7.  Facility according to any of the preceding claims, wherein the analysis module (10) comprises or is connected to a pressure sensor (6) in fluid communication with the gas passage opening (20) and adapted for measuring a level of positive pressure inside the container (2).

8.  Facility according to any of the preceding claims, comprising a gas injection device (4) adapted to inject gas, preferably pressurized, into the container (2) by said gas passage opening (20) prior to the control parameter determination;
    and optionally wherein the gas injection device (4), the pumping means (40), and a control unit (7) comprising the control module (9) and the analysis module (10) are incorporated into a device (3) for preparing the interior of the container.

9.  Facility according to any of the preceding claims, wherein the container (2) is flexible and sealed closed, the container comprising gas-impermeable plastic walls.

10. Method for preparing a sealed container (2) loaded with a biopharmaceutical fluid (B), a gas occupying an inner filling space (Vg) inside the container at an initial level of positive pressure, wherein the gas filling level within the container is controlled, the method comprising the steps consisting essentially of:

    b) estimating a gas filling control parameter which is representative of said inner filling space (Vg),
    c) generating a negative pressure in the inner filling space (Vg) by forcing gas to flow out of the container (2), the duration of the forced flow being adjusted according to said control parameter.

11. Method according to claim 10, wherein the forced flow is achieved by pumping at a constant flow rate, the forced flow being stopped after a first time limit corresponding to the time required to discharge an amount of gas equal to 30% of the initial amount of gas contained in the inner filling space (Vg) determined in step b) and before a second time limit corresponding to the time required to evacuate an amount of gas equal to 50% of the initial amount of gas contained in the inner filling space (Vg) determined in step b).

12. Method according to any of claims 10 or 11, further comprising the following step before step b):

    a) selectively controlling a flow of released gas through a gas passage opening (20) of the container, so as to lower the positive pressure inside the container (2); and wherein the estimating in b) includes monitoring the flow of released gas between a first level of positive pressure OP1 and a second level of positive pressure OP2 in the inner filling space.

13. Method according to claim 12, wherein said control parameter is estimated by determining the duration of the gas release $\Delta t$ required to drop from the first level of positive pressure OP1 to the second level of positive pressure OP2.

14. Method according to any of claims 10 to 13, comprising, prior to step a), the steps consisting essentially of:

    - injecting a gas, preferably air or nitrogen, into the container (2) until a positive pressure is reached in the inner filling space (Vg) of between 10 and 50 mbar; and
    - freezing the biopharmaceutical fluid.

15. Method according to any of claims 10 to 14, wherein step b) is performed when a gas release valve (V2) in fluid communication with the gas passage opening (20) is selectively opened, said gas release valve (V2) remaining open until the pressure between the inner filling space (Vg) and the environment is equalized, several measurements

EP 2 976 264 B1

of a parameter of the gas representative of a level of positive pressure in the inner filling space being performed during step b).

FIG. 1

# FIG. 2

FIG. 3

FIG. 4

FIG. 6

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1441585 A
- WO 2007103917 A
- EP 1441586 A
- WO 2011063381 A
- EP 2101129 A2
- WO 2012044403 A
- WO 0004131 A1